(19) Europäisches Patentamt
European Patent Office
Office européen des brevets

(11) **EP 3 818 285 B1**

(12) **EUROPÄISCHE PATENTSCHRIFT**

(45) Veröffentlichungstag und Bekanntmachung des Hinweises auf die Patenterteilung:
**07.09.2022 Patentblatt 2022/36**

(21) Anmeldenummer: **19729477.0**

(22) Anmeldetag: **03.06.2019**

(51) Internationale Patentklassifikation (IPC):
***F16H 57/08*** *(2006.01)*

(52) Gemeinsame Patentklassifikation (CPC):
**F16H 57/082**

(86) Internationale Anmeldenummer:
**PCT/EP2019/064281**

(87) Internationale Veröffentlichungsnummer:
**WO 2020/007544 (09.01.2020 Gazette 2020/02)**

(54) **VERFORMUNGSOPTIMIERTER PLANETENBOLZEN**

DEFORMATION-OPTIMIZED PLANET PIN

AXE DE SATELLITE À DÉFORMATION OPTIMISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2018 DE 102018211161**

(43) Veröffentlichungstag der Anmeldung:
**12.05.2021 Patentblatt 2021/19**

(73) Patentinhaber:
• **ZF Friedrichshafen AG**
  **88046 Friedrichshafen (DE)**
• **ZF Wind Power Antwerpen N.V.**
  **3920 Lommel (BE)**

(72) Erfinder: **LEIMANN, Dirk**
**2650 EDEGEM (BE)**

(74) Vertreter: **ZF Friedrichshafen AG**
**Gewerblicher Rechtsschutz**
**Löwentalerstraße 20**
**88046 Friedrichshafen (DE)**

(56) Entgegenhaltungen:
**DE-A1- 19 706 686    JP-A- H09 177 758**
**US-A1- 2010 197 444    US-B1- 8 790 213**

**Beschreibung**

Die Erfindung betrifft einen Planetenbolzen nach dem Oberbegriff von Anspruch 1. Planetenbolzen, d.h. Bolzen, die zur Lagerung von Planetenrädern in einem Planetenträger fixiert sind, sind in der Regel Verformungen unterworfen. Verformungen können etwa aus Kräften resultieren, die in der Verzahnung der Planetenräder auftreten oder aus Belastungen durch Drehmomente, die der Planetenträger zu übertragen hat.

Die Verformungen des Planetenbolzens sind insbesondere bei gleitgelagerten Planetenrädern kritisch. Der verschleißfreie Betrieb eines Gleitlagers setzt einen großflächig vorhandenen Schmierfilm voraus. Verformungen führen aber dazu, dass der Schmierfilm lokal zusammenbricht, sodass die Lagerschalen in Kontakt kommen und Festkörperreibung entsteht. Die Folge ist ein erhöhter Verschleiß an den entsprechenden Stellen.

Aus den Druckschriften US 8 790 213 B1 , JP-H 07 293 557 und JP-H 09 177 758 A1 sind Gleitlager bekannt, deren Lauffläche eine ballige Kontur aufweist. Dadurch werden Durchbiegungen, die etwa durch radial wirkende Kräfte verursacht werden können, kompensiert. Nicht kompensiert werden allerdings Verformungen, die durch axial angreifende Kräfte hervorgerufen werden.

In Planetengetrieben auftretenden Belastungen gehen mit S-förmigen Verformungen der Planetenbolzen einher. Besonders stark sind derartige Verformungen in hochbelasteten Getrieben von Windkraftanlagen ausgeprägt. Lösungen zur Kompensation S-förmigen Verformungen sind bisher nicht bekannt.

Der Erfindung liegt die Aufgabe zugrunde, die Verschleißfestigkeit gleitgelagerter Planetenräder zu verbessern.

Diese Aufgabe wird gelöst durch einen Planetenbolzen nach Anspruch 1. Bevorzugte Weiterbildungen sind in den Unteransprüchen enthalten.

Die Erfindung sieht eine gezielte Korrektur einer Außenkontur des Planetenbolzens in mindestens einem Längsschnitt vor. Bei dem Längsschnitt handelt es sich um eine Schnittdarstellung, die gemäß DIN ISO 128-40 und DIN ISO 128-50 definiert ist. Die Schnittebene ist vorliegend so ausgerichtet, dass sie eine Mittelachse eines auf den Planetenbolzen fixierten oder gelagerten Planetenrads beinhaltet. Die Mittelachse ist mit einer Drehachse des Planetenrads identisch.

Die Mittelachse verläuft durch den Planetenbolzen und schneidet den Planetenbolzen ausschließlich in Punkten, die einen Flächenschwerpunkt einer orthogonal zu der Mittelachse ausgerichteten Schnittfläche darstellen. Im Falle eines rotationssymmetrischen Planetenbolzens ist dessen Symmetrieachse ist gleichzeitig Mittelachse.

Bei der Außenkontur handelt es sich um die Körperkanten des Planetenbolzens im unbelasteten Zustand. Der Planetenbolzen nimmt den unbelasteten Zustand an, wenn keinerlei Kräfte auf ihn einwirken.

Die Außenkontur des Planetenbolzens wird durch eine Funktion r(x) beschrieben. In Abhängigkeit der axialen Position x verläuft die Außenkontur in einem Abstand r(x) zu der Mittelachse des Planetenbolzens. Dies bedeutet, dass es sich bei mindestens einem Teil der Außenkontur um einen Graphen der Funktion r(x) handelt. Die axiale Position bezeichnet einen Punkt der Mittelachse. Dieser ist definiert durch einen Abstand x zu einem ebenfalls auf der Mittelachse liegenden Referenzpunkt. Orthogonal dazu befindet sich in einem Abstand r(x) ein Punkt der Außenkontur.

Erfindungsgemäß ist r(x) über mindestens einem Intervall $[x_1,x_2]$ wie folgt aus drei Teilfunktionen zusammengesetzt:

$$r(x) = l(x) + g(x) + o(x),$$

für alle $x \in [x_1,x_2]$, mit einer linearen Funktion $l$(x).

Dabei kann etwa $x_1 = 0$ sein, sodass der obengenannte Referenzpunkt bei $x_1$ liegt. rektur des Planetenbolzens wird also durch die Funktion $g$ mit einer konvexen Korrektur versehen.

Um eine S-förmige Verformung des Planetenbolzens zu kompensieren, erfolgt eine zusätzliche, S-förmigen Korrektur. Eine entsprechende Korrekturfunktion $o$ verläuft S-förmig. Im Einzelnen gilt $o(x_0) = 0$ für mindestens ein $x_0 \in \,]x_1,x_2[$, wobei die Funktion $o$ auf dem Intervall $[x_1,x_0]$ konkav, auf dem Intervall $[x_0, x_2]$ konvex und in $x_0$ fallend ist, d.h. es gilt: $o'(x_0) < 0$.

In einer bevorzugten Weiterbildung ist die Funktion $g$ stetig und/oder die Funktion $o$ ist stetig.

Die Funktion $l$ in einer darüber hinaus bevorzugten Weiterbildung auf dem Intervall $[x_1, x_2]$ positiv.

$l$ kann als eine konstante Funktion oder als eine fallende Funktion, mit $l(x_1) > l(x_2)$, weitergebildet sein.

Die Funktion $g$ weist in der Erfindung auf dem Intervall $]x_1, x_2[$ ein Minimum auf.

Insbesondere kann $g$ auf dem Intervall $]x_1,x_2[$ negativ sein. Dies bedeutet, dass für alle $x \in \,]x_1, x_2[$ gilt: $g(x) < 0$.

In einer darüber hinaus bevorzugten Weiterbildung gilt:

$$g(x_1) = g(x_2) = 0.$$

Die Funktion $g$ ist bevorzugt auf dem Intervall $[x_1, x_2]$ größer als $-l$. Dies bedeutet, dass für alle $x \in [x_1, x_2]$ gilt:

$$g(x) > -l(x).$$

Zudem wird eine spiegelsymmetrische Weiterbildung von $g$ auf dem Intervall $[x_1, x_2]$ bevorzugt. Dabei

gilt für alle $x \in \left[ x_1, \frac{1}{2}(x_1 + x_2) \right]$ :

$$r(x) = r(x_1 + x_2 - x)$$

Die Funktion o weist in einer bevorzugten Weiterbildung auf dem Intervall $[x_1, x_0]$ ein Maximum auf.

Auch werden positive Werte der Funktion o auf dem Intervall $[x_1, x_0[$ bevorzugt.

Auf dem Intervall $[x_0, x_2]$ weist die Funktion o in einer darüber hinaus bevorzugten Weiterbildung ein Minimum auf.

Auf dem Intervall $[x_0, x_2]$ werden negative Werte der Funktion o bevorzugt.

In einer zudem bevorzugten Weiterbildung gilt:

$$o(x_1) = o(x_2) = 0.$$

Bevorzugte Ausführungsbeispiele der Erfindung sind in den Figuren dargestellt. Im Einzelnen zeigt:

Fig. 1 einen herkömmlichen Planetenbolzen;
Fig. 2 einen verformungsoptimierten Planetenbolzen; und
Fig. 3 den verformungsoptimierten Planetenbolzen im belasteten Zustand.

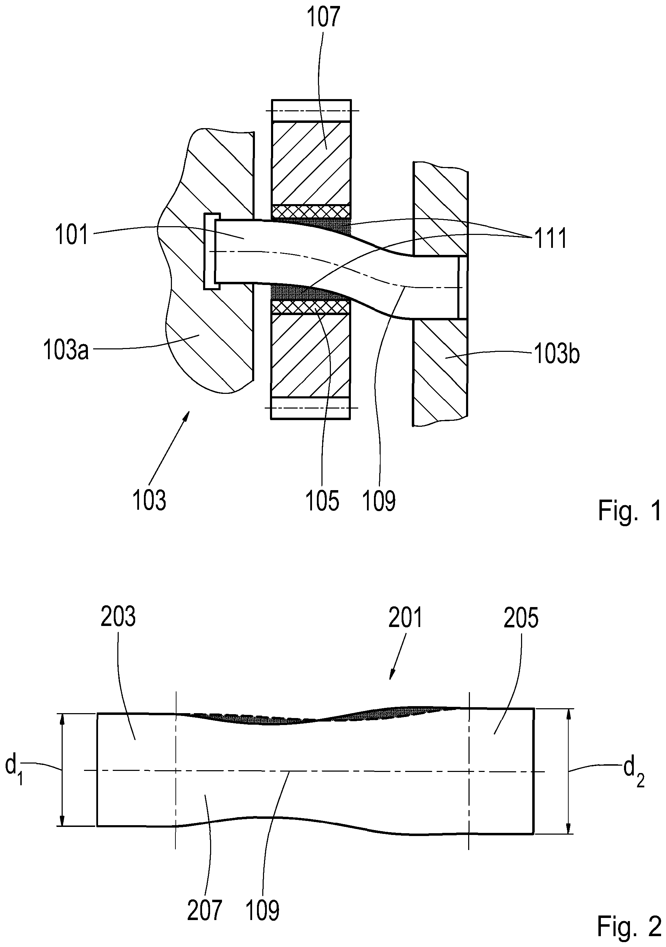

Der in Fig. 1 dargestellte Planetenbolzen 101 ist in einem Planetenträger 103 fixiert. Mittels eines Gleitlagers 105 ist ein Planetenrad 107 drehbar auf dem Planetenbolzen 101 gelagert.

Durch die im Betrieb auftretenden Belastungen verformt sich der Planetenträger 103. Eine erste Wange 103a und eine zweite Wange 103b des Planetenträgers 103 verschieben sich gegeneinander. Dies führt zu einer S-förmigen Verformung des Planetenbolzens 101. Infolgedessen verläuft eine Mittelachse 109 des Planetenbolzens 101 S-förmig. Da der Planetenbolzen im unbelasteten Zustand zylinderförmig ist, verlaufen dessen axiale Körperkanten parallel zu der Mittelachse 109 und somit im belasteten Zustand ebenfalls S-förmig.

Die Verformungen des Planetenbolzens 101 wirken sich auf einen Lagerspalt 111 des Gleitlagers 105 aus. Durch den S-förmigen Verlauf der Außenkontur vergrößert sich stellenweise der Lagerspalt. Stellenweise verkleinert er sich. In den Bereichen mit verkleinertem Lagerspalt kommt es zu Festkörperreibung. Dies führt zu lokal erhöhtem Verschleiß.

Ein verformungsoptimierter Planetenbolzen 201 ist in Fig. 2 dargestellt. Die Kontur des Planetenbolzens 201 ist so korrigiert, dass eine S-förmige Verformung weitestgehend kompensiert wird. Dies lässt sich durch einen S-förmigen Verlauf der Außenkontur erreichen. Der Verlauf der Außenkontur entspricht einem abgeflachten Negativprofil des S-förmigen Verlaufs der Mittelachse 109 im belasteten Zustand.

Der Planetenbolzen 201 besteht aus drei Abschnitten - einem ersten Endabschnitt 203, einem zweiten Endabschnitt 205 und einem Mittelteil 207. Der Mittelteil 207 ist axial zwischen dem ersten Endabschnitt 203 und dem zweiten Endabschnitt 205 angeordnet und verbindet beide Endabschnitte 203, 205 miteinander. Die Endabschnitte 203, 205 dienen dazu, den Planetenbolzen 201 jeweils in einer Wange eines Planetenträgers zu fixieren. Entsprechend sind die Endabschnitte 203, 205 zylinderförmig.

Ein Durchmesser $d_1$ des ersten Endabschnitts 203 ist kleiner als ein Durchmesser $d_2$ des zweiten Endabschnitts 205.

Ausgehend von einer - aufgrund der unterschiedlichen Durchmesse der Endabschnitte 203, 205- kegelförmigen Grundform des Mittelteils 207 erfolgt eine verformungsoptimierte Korrektur des Planetenbolzens 201 in zwei Schritten: In einem ersten Schritt wird die Kontur des Mittelteils 207 so modifiziert, dass sich ein konkaver Verlauf ergibt. Der kegelstumpfförmige Mittelteil 207 wird dazu mit einer konkaven Korrekturfunktion überlagert. Die konkave Korrektur nach dem ersten Schritt ist in Fig. 2 gestrichelt eingezeichnet.

In einem zweiten Schritt erfolgt eine S-förmige Korrektur des konkaven Mittelteils 207. Dazu wird die Kontur des konkaven Mittelteils 207 mit einer S-förmigen Korrekturfunktion überlagert. Die S-förmige Korrekturfunktion bewirkt eine Vergrößerung des Einzugs aufseiten des ersten Endstücks 203 und eine Verringerung des Einzugs aufseiten des zweiten Endstücks 205.

Bei der Anwendung des ersten Schritts und des zweiten Schritts zur verformungsoptimierten Korrektur des Planetenbolzens 203 handelt es sich um Berechnungsverfahren. Gefertigt wird schließlich die Kontur, die als Ergebnis des Berechnungsverfahrens resultiert.

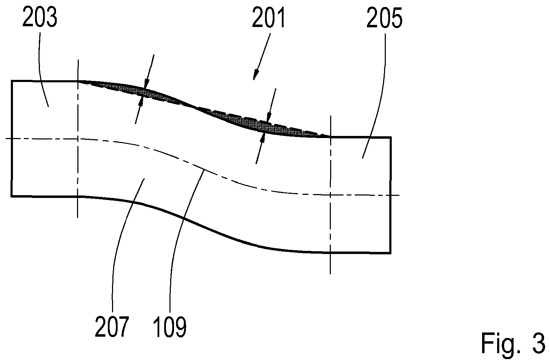

Fig. 3 zeigt den verformungsoptimierten Planetenbolzen 203 im belasteten Zustand. Der Verlauf der Mittelachse 109 entspricht dabei dem in Fig. 1 dargestellten Verlauf.

Der hypothetische Verlauf der Außenkontur des Planetenbolzens 201 ohne Korrekturen ist zur Veranschaulichung in Fig. 3 gestrichelt dargestellt. Dieser Verlauf entspricht dem Verlauf der Außenkontur des in Fig. 1 dargestellten Planetenbolzens 101. Es ist zu erkennen, dass die oben beschriebenen Korrekturen zu einem begradigten Verlauf der Außenkontur führen. Dies bewirkt einen gleichförmigeren Verlauf des Lagerspalts 111.

Bezuqszeichen

| | |
|---|---|
| 101 | Planetenbolzen |
| 103 | Planetenträger |
| 103a | Wange |
| 103b | Wange |
| 105 | Gleitlager |
| 107 | Planetenrad |

109 Mittelachse
111 Lagerspalt
201 Planetenbolzen

**Patentansprüche**

1. Planetenbolzen (101), dessen Außenkontur in mindestens einem Längsschnitt in Abhängigkeit einer axialen Position x in einem Abstand r(x) zu einer Mittelachse (109) des Planetenbolzens (109) verläuft; wobei

   für mindestens ein Intervall $[x_1,x_2]$ gilt:

   $$r(x) = l(x) + g(x) + o(x),$$

   für alle x E $[x_1,x_2]$, mit einer linearen Funktion $l(x)$; wobei
   $o(x_0) = 0$ für mindestens ein $x_0 \in ]x_1,x_2[$ gilt; wobei
   die Funktion o auf dem Intervall $[x_1, x_0]$ konkav und auf dem Intervall $[x_0, x_2]$ konvex; und wobei $o'(x_0) < 0$ gilt; **dadurch gekennzeichnet, dass** g auf dem Intervall $[x_1, x_2]$ konvex ist und auf dem Intervall $]x_1,x_2[$ ein Minimum aufweist.

2. Planetenbolzen (101) nach Anspruch 1; **dadurch gekennzeichnet, dass** die Funktionen g und/oder o stetig sind.

3. Planetenbolzen (101) nach einem der vorhergehenden Ansprüche; **dadurch gekennzeichnet, dass** die Funktion l auf dem Intervall $[x_1, x_2]$ positiv ist.

4. Planetenbolzen (101) nach einem der vorhergehenden Ansprüche; **dadurch gekennzeichnet, dass** l eine konstante Funktion ist.

5. Planetenbolzen (101) nach einem der Ansprüche 1 bis 3; **dadurch gekennzeichnet, dass** gilt:

   $$l(x_1) > l(x_2).$$

6. Planetenbolzen (101) nach einem der vorhergehenden Ansprüche; **dadurch gekennzeichnet, dass** die Werte der Funktion g auf dem Intervall $]x_1,x_2[$ negativ sind.

7. Planetenbolzen (101) nach einem der vorhergehenden Ansprüche; **dadurch gekennzeichnet, dass** gilt:

   $$g(x_1) = g(x_2) = 0.$$

8. Planetenbolzen (101) nach einem der vorhergehenden Ansprüche; **dadurch gekennzeichnet, dass** dass für alle x E $[x_1, x_2]$ gilt:

   $$g(x) > -l(x).$$

9. Planetenbolzen (101) nach einem der vorhergehenden Ansprüche; **dadurch gekennzeichnet, dass** die Funktion g auf dem Intervall $[x_1, x_2]$ spiegelsymmetrisch ist.

10. Planetenbolzen (101) nach einem der vorhergehenden Ansprüche; **dadurch gekennzeichnet, dass** die Funktion o auf dem Intervall $[x_1, x_0]$ ein Maximum aufweist.

11. Planetenbolzen (101) nach einem der vorhergehenden Ansprüche; **dadurch gekennzeichnet, dass** die Werte der Funktion o auf dem Intervall $[x_1, x_0]$ positiv sind.

12. Planetenbolzen (101) nach einem der vorhergehenden Ansprüche; **dadurch gekennzeichnet, dass** die Funktion o auf einem Intervall $[x_0, x_2]$ ein Minimum aufweist.

13. Planetenbolzen (101) nach einem der vorhergehenden Ansprüche; **dadurch gekennzeichnet, dass** die Werte der Funktion o auf einem Intervall $[x_0, x_2]$ negativ sind.

14. Planetenbolzen (101) nach einem der vorhergehenden Ansprüche; **dadurch gekennzeichnet, dass** gilt:

    $$o(x_1) = o(x_2) = 0.$$

**Claims**

1. Planet pin (101), the outer contour of which runs at a distance r(x) from a centre axis (109) of the planet pin (101) in dependence on an axial position x in at least one longitudinal section; wherein for at least one interval $[x_1,x_2]$, the following applies:

   $$r(x) = l(x) + g(x) + o(x),$$

   for all x E $[x_1,x_2]$, with a linear function $l(x)$; wherein:

   $o(x_0) = 0$ for at least one xo $\in ]x_1,x_2[$; wherein the function o is concave on the interval $[x_1,x_0]$ and convex on the interval $[x_0,x_2]$;
   and wherein
   $o'(x_0) < 0$ applies; **characterized in that** g is convex on the interval $[x_1,x_2]$ and has a minimum on the interval $]x_1,x_2[$.

2. Planet pin (101) according to Claim 1; **characterized in that** the functions g and/or *o* are continuous.

3. Planet pin (101) according to either of the preceding claims; **characterized in that** the function *l* is positive on the interval $[x_1,x_2]$.

4. Planet pin (101) according to one of the preceding claims; **characterized in that** *l* is a constant function.

5. Planet pin (101) according to one of Claims 1 to 3; **characterized in that** the following applies:

$$l(x_1 > l(x_2).$$

6. Planet pin (101) according to one of the preceding claims; **characterized in that** the values of the function g are negative on the interval $]x_1,x_2[$.

7. Planet pin (101) according to one of the preceding claims; **characterized in that** the following applies:

$$g(x_1) = g(x_2) = 0.$$

8. Planet pin (101) according to one of the preceding claims; **characterized in that** for all x $E$ $[x_1,x_2]$ the following applies:

$$g(x) > -l(x).$$

9. Planet pin (101) according to one of the preceding claims; **characterized in that** the function g is mirror-symmetrical on the interval $[x_1,x_2]$.

10. Planet pin (101) according to one of the preceding claims; **characterized in that** the function *o* has a maximum on the interval $[x_1,x_0]$ .

11. Planet pin (101) according to one of the preceding claims; **characterized in that** the values of the function *o* are positive on the interval $[x_1,x_0]$.

12. Planet pin (101) according to one of the preceding claims; **characterized in that** the function *o* has a minimum on an interval $[x_0,x_2]$.

13. Planet pin (101) according to one of the preceding claim; **characterized in that** the values of the function *o* are negative on an interval $[x_0,x_2]$.

14. Planet pin (101) according to one of the preceding claims; **characterized in that** the following applies:

$$o(x_1) = o(x_2) = 0.$$

**Revendications**

1. Axe de satellite (101), dont le contour extérieur, dans au moins une portion de longueur, suit un tracé en fonction d'une position axiale x à un écart r(x) par rapport à un axe central (109) de l'axe de satellite (101) ;

   la relation suivante étant vérifiée pour au moins un intervalle $[x_1, x_2]$ :

$$r(x) = l(x) + g(x) + o(x),$$

   pour tous les x $\in$ $[x_1, x_2]$, avec une fonction linéaire l(x) ;
   o(xo) = 0 étant vérifié pour au moins un $x_0 \in ]x_1, x_2[$ ; la fonction o étant concave sur l'intervalle $[x_1, x_0]$ et convexe sur l'intervalle $[x_0, x_2]$ ; et o'$(x_0)$ < 0 étant vérifié ; **caractérisé en ce que** g est convexe sur l'intervalle $[x_1, x_2]$ et présente un minimum sur l'intervalle $]x_1, x_2[$.

2. Axe de satellite (101) selon la revendication 1, **caractérisé en ce que** les fonctions g et/ou o sont constantes.

3. Axe de satellite (101) selon l'une des revendications précédentes, **caractérisé en ce que** la fonction *l* est positive sur l'intervalle $[x_1, x_2]$.

4. Axe de satellite (101) selon l'une des revendications précédentes, **caractérisé en ce que** l est une fonction constante.

5. Axe de satellite (101) selon l'une des revendications 1 à 3, **caractérisé en ce que** la relation suivante est vérifiée :

$$l(x_1) > l(x_2).$$

6. Axe de satellite (101) selon l'une des revendications précédentes, **caractérisé en ce que** les valeurs de la fonction g sont négatives sur l'intervalle $]x_1, x_2[$.

**7.** Axe de satellite (101) selon l'une des revendications précédentes, **caractérisé en ce que** la relation suivante est vérifiée :

$$g(x_1) = g(x_2) = 0.$$

**8.** Axe de satellite (101) selon l'une des revendications précédentes, **caractérisé en ce que** la relation suivante est vérifiée pour tous les $x \in [x_1, x_2]$ :

$$g(x) > -l(x).$$

**9.** Axe de satellite (101) selon l'une des revendications précédentes, **caractérisé en ce que** la fonction g est symétrique en miroir sur l'intervalle $[x_1, X2]$ .

**10.** Axe de satellite (101) selon l'une des revendications précédentes, **caractérisé en ce que** la fonction o présente un maximum sur l'intervalle $[x_1, xo]$.

**11.** Axe de satellite (101) selon l'une des revendications précédentes, **caractérisé en ce que** les valeurs de la fonction o sont positives sur l'intervalle $[x_1, x_0]$.

**12.** Axe de satellite (101) selon l'une des revendications précédentes, **caractérisé en ce que** la fonction o présente un minimum sur l'intervalle $[x_0, x_2]$.

**13.** Axe de satellite (101) selon l'une des revendications précédentes, **caractérisé en ce que** les valeurs de la fonction o sont négatives sur l'intervalle $[x_0, x_2]$ .

**14.** Axe de satellite (101) selon l'une des revendications précédentes, **caractérisé en ce que** la relation suivante est vérifiée :

$$o(x_1) = o(x_2) = 0.$$

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8790213 B1
- JP H07293557 B

- JP H09177758 A